# EUROPEAN PATENT SPECIFICATION

(11) **EP 2 446 677 B1**
(45) Date of publication and mention of the grant of the patent: **26.11.2014**
(21) Application number: 10740455.0
(22) Date of filing: 25.06.2010
(51) Int. Cl.: H04W 56/00, H04B 7/04

(54) **Method and apparatus for multiple user uplink requiring minimal station timing and frequency synchronization**
Verfahren und Einrichtung für mehrnutzer mit minimaler Zeit- und Frequenz-Synchronization im Uplink
Procédé et appareil pour utilisateurs multiples nécessitant une synchronization minimale de temps et fréquence de liaison montante

(30) Priority: 26.06.2009 US 220919 P; 26.08.2009 US 548081
(43) Date of publication of application: 02.05.2012
(73) Proprietor: Qualcomm Incorporated, San Diego, CA 92121 (US)
(72) Inventor: SAMPATH, Hemanth, San Diego, California 92121 (US); ABRAHAM, Santosh P., San Diego, California 92121 (US); VERMANI, Sameer, San Diego, California 92121 (US); JONES, IV, Vincent Knowles, San Diego, California 92121 (US)
(74) Representative: Wimmer, Hubert
(86) International application number: PCT/US2010/040085
(87) International publication number: WO 2010/151826

(56) References cited:
- WO-A1-2008/153078
- NTT DOCOMO ET AL: "Uplink synchronization" 3GPP DRAFT; R2-062165, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Tallinn; 20060823, 23 August 2006 (2006-08-23), XP050131779 [retrieved on 2006-08-23]
- SHENG ZHOU ET AL: "An Uplink Medium Access Protocol with SDMA Support for Multiple-Antenna WLANs", WIRELESS COMMUNICATIONS AND NETWORKING CONFERENCE, 2008. WCNC 2008. IEEE, IEEE, PISCATAWAY, NJ, USA, 31 March 2008 (2008-03-31), pages 1809-1814, XP031243907, ISBN: 978-1-4244-1997-5

## Description

### BACKGROUND

### I. Field

The following description relates generally to communication systems, and more particularly to a method and apparatus for multiple user uplink requiring minimal station timing and frequency synchronization.

### II. Background

In order to address the issue of increasing bandwidth requirements that are demanded for wireless communications systems, different schemes are being developed to allow multiple user terminals to communicate with a single access point by sharing the channel resources while achieving high data throughputs. Multiple Input or Multiple Output (MIMO) technology represents one such approach that has recently emerged as a popular technique for the next generation communication systems. MIMO technology has been adopted in several emerging wireless communications standards such as the Institute of Electrical Engineers (IEEE) 802.11 standard. IEEE 802.11 denotes a set of Wireless Local Area Network (WLAN) air interface standards developed by the IEEE 802.11 committee for short-range communications (e.g., tens of meters to a few hundred meters).

In wireless communications systems, medium access (MAC) protocols are designed to operate to exploit several dimensions of freedom offered by the air link medium. The most commonly exploited dimensions of freedom are time and frequency. For example, in the IEEE 802.11 MAC protocol, the "time" dimension of freedom is exploited through the CSMA (Carrier Sense Multiple Access). The CSMA protocol attempts to ensure that no more than one transmission occurs during a period of potential high interference. Similarly, the "frequency" dimension of freedom can be exploited by using different frequency channels.

Recent developments have led to space as a dimension being a viable option to be used to increase, or at least more efficiently use, existing capacity. Spatial Division Multiple Access (SDMA) can be used for improving utilization of the air link by scheduling multiple terminals for simultaneous transmission and reception. Data is sent to each of the terminals using spatial streams. For example, with SDMA, a transmitter forms orthogonal streams to individual receivers. Such orthogonal streams can be formed because the transmitter has several antennas and the transmit/receive channel consists of several paths. Receivers may also have one or more antennas (MIMO, SIMO). For this example, it is assumed that the transmitter is an access point (AP) and the receivers are stations (STAs). The streams are formed such that a stream targeted at STA-B, for example, is seen as low power interference at STA-C, STA-D, ..., etc., and this will not cause significant interference and most likely be ignored. In order to form these orthogonal streams, the AP needs to have channel state information (CSI) from each of the receiving STAs. Although CSI can be measured and communicated in several ways, thereby adding complexity, the use of CSI will optimize the configuration of SDMA streams.

Additional complexities arise when MIMO is applied to multi-user (MU) systems. For example, uplink scheduling requires stations to be synchronized in timing, power, and frequency with the AP. However, the synchronization requirement often places a significant burden on the STAs. For example, STAs may be required to do open-loop power control and adhere to strict timing and frequency requirements as well as perform self-correction.

Consequently, it would be desirable to address one or more of the deficiencies described above.

Attention is drawn to document SHENG ZHOU ET AL: "An Plink Medium Access Protocol with SDMA Support for Multiple-Antenna WLANs", WIRELESS COMMUNICATIONS AND NETWORKING CONFERENCE, 2008, pages 1809-1814, XP031243907. This document relates to user stations receiving PCTS messages from access points including a training sequence user for data transmission and applying frequency synchronization with the AP.

### SUMMARY

In accordance with the present invention, method for wireless communications, as set forth in claims 1 and 13, and an apparatus for wireless communications, as set forth in claims 12 and 18, is provided. Further embodiments are claimed in the dependent claims.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

According to various aspects, the subject innovation relates to apparatus and methods that provide wireless communications, where a method for wireless communications includes sending correction information to a plurality of wireless nodes; receiving corrected data generated by at least one station of the plurality of wireless nodes based on the correction information; and spatially processing the corrected data.

In another aspect, an apparatus for wireless communications is provided that includes a processing system configured to send correction information to a plurality of wireless nodes; receive corrected data generated by at least one station of the plurality of wireless nodes based on the correction information; and spatially process the corrected data.

In yet another aspect, an apparatus for wireless communications is provided that includes means for sending correction information to a plurality of wireless nodes; means for receiving corrected data generated by at least one station of the plurality of wireless nodes based on the correction information; and means for spatially processing the corrected data.

In yet another aspect, a computer-program product for wireless communications is provided that includes a machine-readable medium including instructions executable to send correction information to a plurality of wireless nodes; receive corrected data generated by at least one station of the plurality of wireless nodes based on the correction information; and spatially process the corrected data.

In yet another aspect, an access point is provided that includes one or more antennas; a transmitter configured to send, via the one or more antennas, correction information through the antennas to a plurality of wireless nodes; a receiver configured to receive corrected data generated by at least one station of the plurality of wireless nodes based on the correction information; and a processor configured to spatially process the corrected data.

In yet another aspect, a method for wireless communications is provided that includes receiving correction information; and transmitting data based on the correction information.

In yet another aspect, an apparatus for wireless communications is provided that includes a processing system configured to receive correction information; and transmit data based on the correction information.

In yet another aspect, an apparatus for wireless communications is provided that includes means for receiving correction information; and means for transmitting data based on the correction information.

In yet another aspect, a computer-program product for wireless communications is provided that includes a machine-readable medium including instructions executable to receive correction information; and transmit data based on the correction information.

In yet another aspect, a mobile station is provided that includes one or more antennas; a receiver configured to receive, via the one or more antennas, correction information; and a transmitter configured to transmit data based on the correction information.

In yet another aspect, an electronic card is provided that includes a receiver configured to receive correction information; and a transmitter configured to transmit data based on the correction information through one or more antennas to one or more nodes.

To the accomplishment of the foregoing and related ends, the one or more aspects comprise the features hereinafter fully described and particularly pointed out in the claims. The following description and the annexed drawings set forth in detail certain illustrative aspects of the one or more aspects. These aspects are indicative, however, of but a few of the various ways in which the principles of various aspects may be employed and the described aspects are intended to include all such aspects and their equivalents.

### BRIEF DESCRIPTION OF THE DRAWINGS

FIG. 1 is a diagram of a wireless communications network configured in accordance with an aspect of the disclosure;
FIG. 2 is a wireless node that includes a front end processing system in a wireless node in the wireless communications network of FIG. 1;
FIG. 3 is a diagram of a TRM frame configured in accordance with one aspect of the disclosure;
FIG. 4 is a timing diagram illustrating the operation of an uplink multiple-user multiple in, multiple out (MU-MIMO) frame sequence with minimal station time/frequency synchronization requirements;
FIG. 5 is a flow diagram illustrating the operation of an uplink EMU-MIMO system with minimal station time/frequency synchronization requirements;
FIG. 6 is a diagram of a sounding frame that includes a SDMA preamble and control information determined by the spatial stream allocation based on the information contained in the TRM frame of FIG. 3;
FIG. 7 is a block diagram illustrating the functionality of an apparatus for using correction information with a plurality of STAs in accordance with one aspect of the disclosure; and
FIG. 8 is a block diagram illustrating the functionality of an apparatus for transmitting data using correction information in accordance with one aspect of the disclosure.

### DETAILED DESCRIPTION

Various aspects of the novel systems, apparatus and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that that the scope of disclosure is intended to cover any aspect of the novel systems, apparatus and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

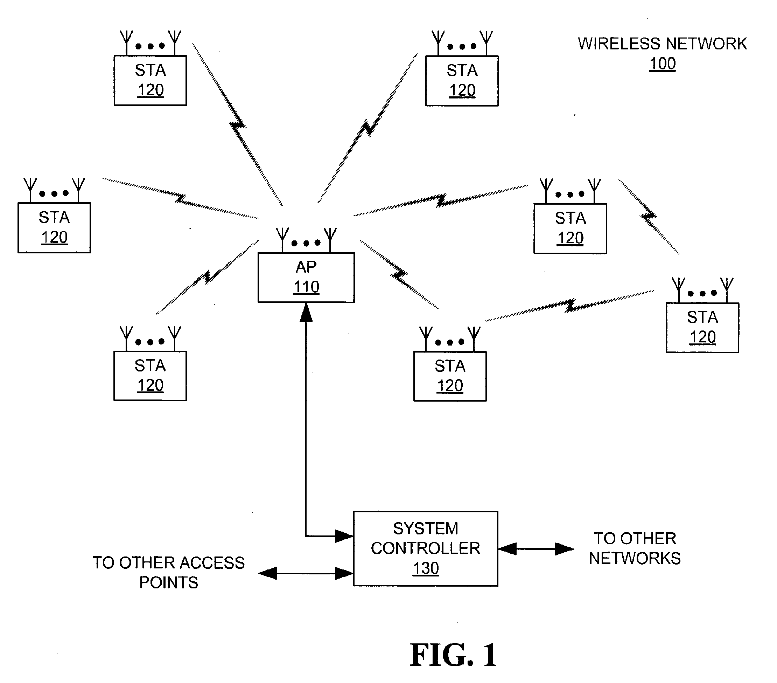

Several aspects of a wireless network will now be presented with reference to FIG. 1. The wireless network, which is also referred to herein as a basic service set (BSS) 100 is shown with several wireless nodes, generally designated as an access point 110 and a plurality of access terminals or stations (STAs) 120. Each wireless node is capable of receiving and/or transmitting. In the detailed description that follows, the term "access point" is used to designate a transmitting node and the term "access terminal" is used to designate a receiving node for downlink communications, whereas the term "access point" is used to designate a receiving node and the term "access terminal" is used to designate a transmitting node for uplink communications. However, those skilled in the art will readily understand that other terminology or nomenclature may be used for an access point and/or access terminal. By way of example, an access point may be referred to as a base station, a base transceiver station, a station, a terminal, a node, a wireless node, an access terminal acting as an access point, or some other suitable terminology. An access terminal may be referred to as a user terminal, a mobile station, a subscriber station, a station, a wireless device, a terminal, a node, a wireless node or some other suitable terminology. The various concepts described throughout this disclosure are intended to apply to all suitable wireless nodes regardless of their specific nomenclature.

The wireless network 100 may support any number of access points distributed throughout a geographic region to provide coverage for access terminals 120. A system controller 130 may be used to provide coordination and control of the access points, as well as access to other networks (e.g., Internet) for the access terminals 120. For simplicity, one access point 110 is shown. An access point is generally a fixed terminal that provides backhaul services to access terminals in the geographic region of coverage. However, the access point may be mobile in some applications. An access terminal, which may be fixed or mobile, utilizes the backhaul services of an access point or engages in peer-to-peer communications with other access terminals. Examples of access terminals include a telephone (e.g., cellular telephone), a laptop computer, a desktop computer, a Personal Digital Assistant (PDA), a digital audio player (e.g., MP3 player), a camera, a game console, or any other suitable wireless node.

The wireless network 100 may support MIMO technology. Using MIMO technology, an access point 110 may communicate with multiple access terminals 120 simultaneously using Spatial Division Multiple Access (SDMA). SDMA is a multiple access scheme which enables multiple streams transmitted to different receivers at the same time to share the same frequency channel and, as a result, provide higher user capacity. This is achieved by spatially precoding each data stream and then transmitting each spatially precoded stream through a different transmit antenna on the downlink. The spatially precoded data streams arrive at the access terminals with different spatial signatures, which enables each access terminal 120 to recover the data stream destined for that access terminal 120. On the uplink, each access terminal 120 transmits a spatially precoded data stream, which enables the access point 110 to identify the source of each spatially precoded data stream. It should be noted that although the term "precoding" is used herein, in general, the term "coding" may also be used to encompass the process of precoding, encoding, decoding and/or postcoding a data stream.

One or more access terminals 120 may be equipped with multiple antennas to enable certain functionality. With this configuration, for example, multiple antennas at the access point 110 may be used to communicate with a multiple antenna access point to improve data throughput without additional bandwidth or transmit power. This may be achieved by splitting a high data rate signal at the transmitter into multiple lower rate data streams with different spatial signatures, thus enabling the receiver to separate these streams into multiple channels and properly combine the streams to recover the high rate data signal.

While portions of the following disclosure will describe access terminals that also support MIMO technology, the access point 110 may also be configured to support access terminals that do not support MIMO technology. This approach may allow older versions of access terminals (i.e., "legacy" terminals) to remain deployed in a wireless network, extending their useful lifetime, while allowing newer MIMO access terminals to be introduced as appropriate.

In the detailed description that follows, various aspects of the disclosure will be described with reference to a MIMO system supporting any suitable wireless technology, such as Orthogonal Frequency Division Multiplexing (OFDM). OFDM is a spread-spectrum technique that distributes data over a number of subcarriers spaced apart at precise frequencies. The spacing provides "orthogonality" that enables a receiver to recover the data from the subcarriers. An OFDM system may implement IEEE 802.11, or some other air interface standard. Other suitable wireless technologies include, by way of example, Code Division Multiple Access (CDMA), Time Division Multiple Access (TDMA), or any other suitable wireless technology, or any combination of suitable wireless technologies. A CDMA system may implement IS-2000, IS-95, IS-856, Wideband-CDMA (WCDMA), or some other suitable air interface standard. A TDMA system may implement Global System for Mobile Communications (GSM) or some other suitable air interface standard. As those skilled in the art will readily appreciate, the various aspects of this disclosure are not limited to any particular wireless technology and/or air interface standard.

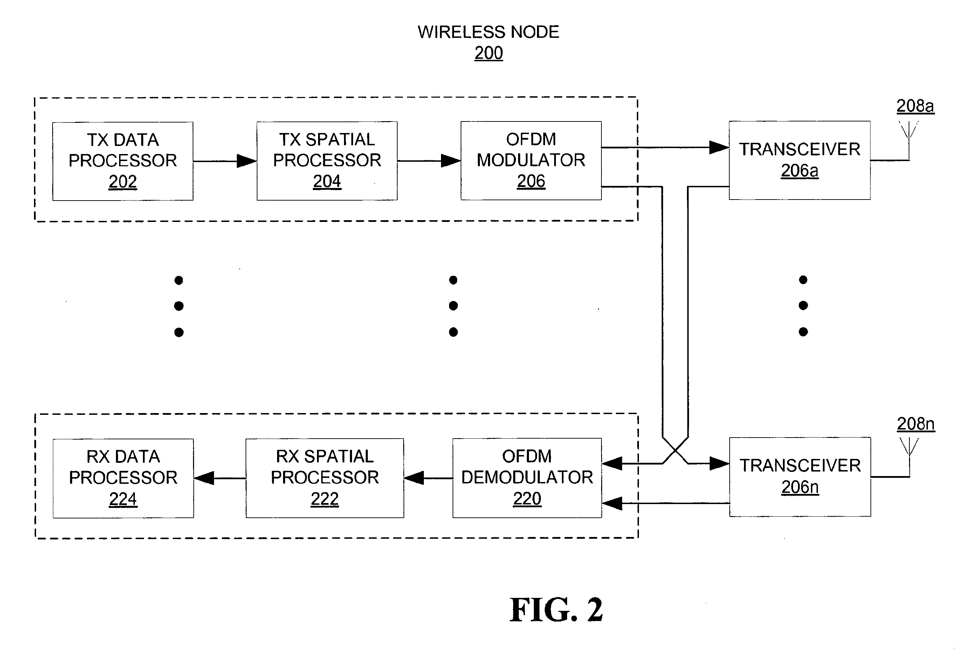

FIG. 2 is a conceptual block diagram illustrating an example of the signal processing functions of the PHY layer. In a transmit mode, a TX data processor 202 may be used to receive data from the MAC layer and encode (e.g., Turbo code) the data to facilitate Forward Error Correction (FEC) at the receiving node. The encoding process results in a sequence of code symbols that that may be blocked together and mapped to a signal constellation by the TX data processor 202 to produce a sequence of modulation symbols.

In wireless nodes implementing OFDM, the modulation symbols from the TX data processor 202 may be provided to an OFDM modulator 204. The OFDM modulator 204 splits the modulation symbols into parallel streams. Each stream is then mapped to an OFDM subcarrier and then combined using an Inverse Fast Fourier Transform (IFFT) to produce a TX spatial processor 204 that performs spatial processing of the modulation symbols. This may be accomplished by spatial precoding the modulation symbols before providing them to an OFDM modulator 206.

The OFDM modulator 206 splits the modulation symbols into parallel streams. Each stream is then mapped to an OFDM subcarrier and then combined together using an Inverse Fast Fourier Transform (IFFT) to produce a time domain OFDM stream. Each spatially precoded OFDM stream is then provided to a different antenna 210a-210n via a respective transceiver 208a-208n. Each transceiver 208a-208n modulates an RF carrier with a respective precoded stream for transmission over the wireless channel.

In a receive mode, each transceiver 208a-208n receives a signal through its respective antenna 210a-210n. Each transceiver 208a-208n may be used to recover the information modulated onto an RF carrier and provide the information to an OFDM demodulator 210.

The RX spatial processor 210 performs spatial processing on the information to recover any spatial streams destined for the wireless node 200. The spatial processing may be performed in accordance with Channel Correlation Matrix Inversion (CCMI), Minimum Mean Square Error (MMSE), Soft Interference Cancellation (SIC), or some other suitable technique. If multiple spatial streams are destined for the wireless node 200, they may be combined by the RX spatial processor 210.20.

In wireless nodes implementing OFDM, the stream (or combined stream) from the transceiver 208a-208n is provided to an OFDM demodulator 220. The OFDM demodulator 220 converts the stream (or combined stream) from time-domain to the frequency domain using a Fast Fourier Transform (FFT). The frequency domain signal comprises a separate stream for each subcarrier of the OFDM signal. The OFDM demodulator 220 recovers the data (i.e., modulation symbols) carried on each subcarrier and multiplexes the data into a stream of modulation symbols before sending the stream to a RX spatial processor 222.

The RX spatial processor 222 performs spatial processing on the information to recover any spatial streams destined for the wireless node 200. The spatial processing may be performed in accordance with Channel Correlation Matrix Inversion (CCMI), Minimum Mean Square Error (MMSE), Soft Interference Cancellation (SIC), or some other suitable technique. If multiple spatial streams are destined for the wireless node 200, they may be combined by the RX spatial processor 222.

A RX data processor 224 may be used to translate the modulation symbols back to the correct point in the signal constellation. Because of noise and other disturbances in the wireless channel, the modulation symbols may not correspond to an exact location of a point in the original signal constellation. The RX data processor 224 detects which modulation symbol was most likely transmitted by finding the smallest distance between the received point and the location of a valid symbol in the signal constellation. These soft decisions may be used, in the case of Turbo codes, for example, to compute a Log-Likelihood Ratio (LLR) of the code symbols associated with the given modulation symbols. The RX data processor 224 then uses the sequence of code symbol LLRs in order to decode the data that was originally transmitted before providing the data to the MAC layer.

The SDMA downlink protocol may include the following steps
(1) Requesting and receiving channel state information (CSI) from all the potential SDMA receivers;
(2) Downlink SDMA packet construction and transmission, and Block Acknowledgement (ACK) transmission time specification; and
(3) Block ACK transmission by the SDMA transmission recipient stations (STAs) and Method for CSI estimation.

Obtaining accurate channel state information is a valuable part of the SDMA protocol as spatial streams are formed such that a stream targeted at a particular STA, for example, are seen as low power interference at other STAs. In order to form these non interfering streams, the transmitting node needs to have the CSI from each of the receiving STAs. In one aspect, the transmitting node sends out a request message indicating that the CSI needs to be estimated. The request message is sent to a set of STAs that are potential SDMA transmission recipients. This message is referred to as a Training Request Message (TRM). In the disclosure contained herein, two examples for obtaining CSI at an SDMA transmitter are provided: implicit CSI exchange and explicit CSI exchange.

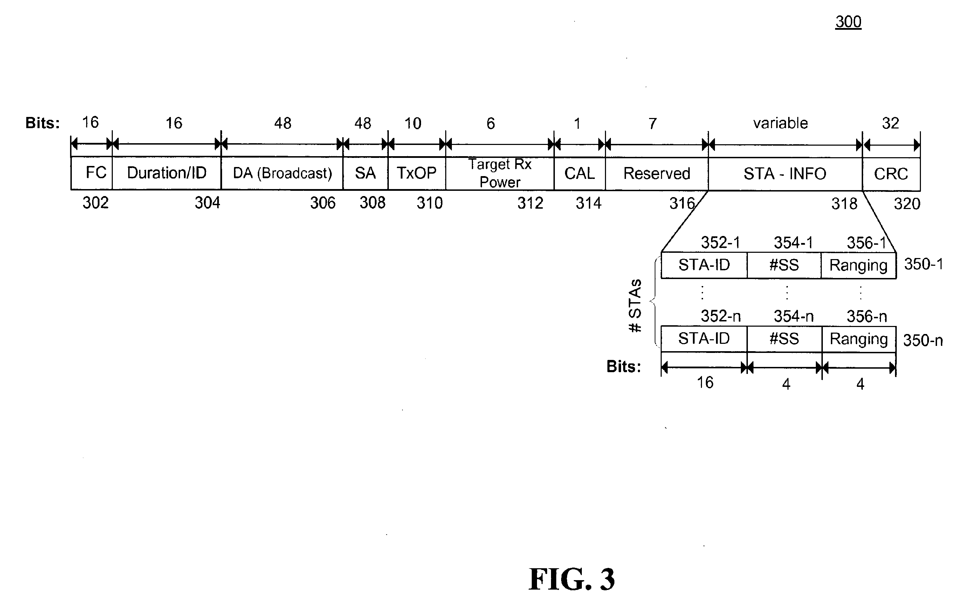

An example of the format of the TRM is shown by a TRM 300 in FIG. 3. The data portion of the TRM 300 contains a STA information field 318 that includes the following information:
(1) STA-ID field 352: Lists the STAs 120 for which the CSI is to be estimated;
(2) #SS field 354: The number of spatial streams for each STA 120; and
(3) Ranging information field 356: Ensure that the sounding symbols arrive time aligned at the AP 110 to ensure accurate joint channel estimate.

The TRM 300 also contains a target Rx Power field 312, which is the Rx power at which an STA's sounding frame should be received at the AP 110. In addition, the TRM 300 also includes a calibration bit 314 that is used for an integrated downlink calibration procedure. Calibration is invoked at relatively large intervals to enable to AP 110 to update correction factors to be applied to the channel estimates.

In one aspect of the disclosure, each TRM such as the TRM 300 is transmitted at a fixed transmit power since the STAs 120 use the transmit power of the TRM to estimate path loss and set transmit power for the uplink sounding frame. The TRM 300 contains the legacy MAC header with the destination address set to the broadcast address in a DA (Broadcast) field 306. The destination address could also be set to a predefined multicast address. The transmission of each TRM is performed using backoff procedures, and in one aspect, the transmission may be performed using the procedures defined in the IEEE 802.11 MAC protocols for contention-based access.

A Duration/ID field 304 in the MAC header is set such that the entire SDMA transmission and the Block ACK reception are accounted for in the distance. In one aspect of the disclosure, each TRM such as the TRM 300 is transmitted at the lowest legacy 802.11a/g rate so the all the STAs 120 in the wireless network 100 can set their NAV appropriately.

Once each of the STAs 120 that are listed in the TRM 300 receives the TRM 300, they each respond with the CSI. In various aspects of the disclosure, multiple approaches may be used to provide an estimate of CSI after a TRM has been transmitted by the SDMA transmitter.

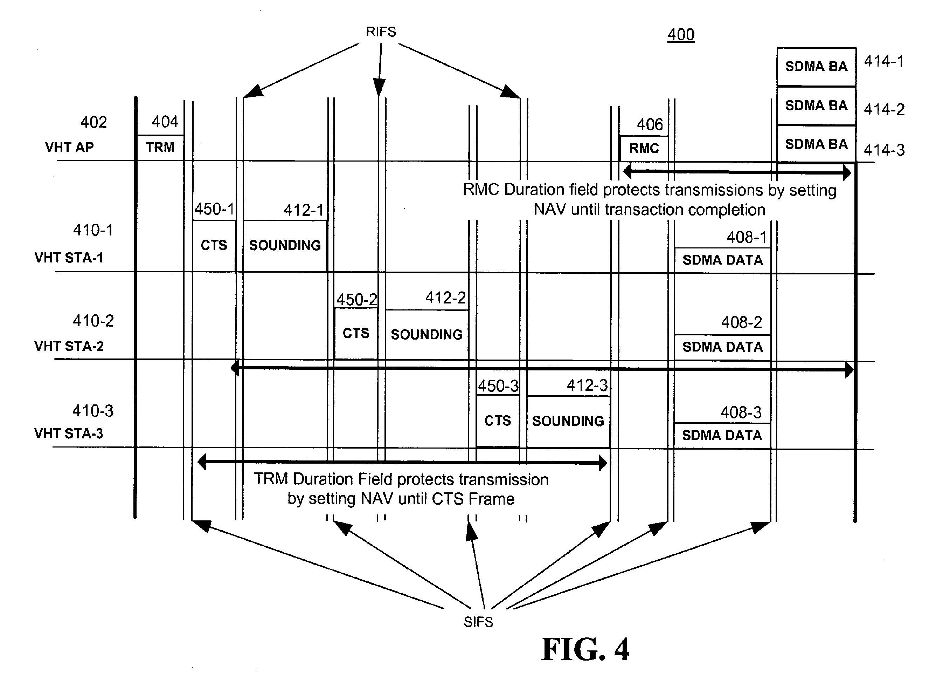

In one aspect, an AP-centric solution to providing the timing and frequency synchronization required for uplink MU-MIMO. FIG. 4 illustrates an uplink MU-MIMO protocol 400 that may require minimal time/frequency synchronization requirements on the plurality of STAs. As illustrated, an AP 402 requests sounding frames from a plurality of STAs 410-1 to 410-3. In one aspect, the AP 402 may request sounding frames only from a subset of the plurality of STAs 410-1 to 410-3. The subset of STAs may be selected for which buffer state information and/or channel state information is outdated.

In response, the STAs 410-1 to 410-3 send sounding frames 412-1 to 412-3 in a serial manner as shown. In one aspect of the disclosure, the sounding frames are optimized to have just short training fields and long training fields. The UL traffic information frame can include buffer size, Quality of Service (QoS), delay and latency requirements, and optionally channel sounding frames and/or CQI. Because the sounding frames 412-1 to 412-3 are sent in a serial manner, tight frequency and time synchronization are not required to estimate the joint downlink channel. In addition, as illustrated, a short interframe spacing (SIFS) may be used between a CTS frame that is piggybacked with sounding information frame across different STAs. In another aspect of the disclosure, a reduced interframe spacing (RIFS) may be used between the CTS Frame and sounding information frame.

The AP 402 can estimate the frequency offset that each STA 410-1 to 410-3 experiences and therefore determine the frequency offset correction to be applied at each STA 410-1 to 410-3.

The AP 402 then feeds back this frequency offset correction to the STAs 410-1 to 410-3 in a RMC message 406. In one aspect of the disclosure, the AP uses a part of the RMC message 406 to set a NAV in order to reserve the medium in its neighborhood and avoid interference. In addition, the AP 402 may follow the Enhanced Distributed Channel Access (EDCA)-based backoff procedure as promulgated by the IEEE 802.11 standard prior to sending the RMC message 406. The RMC message 406 may contain the MAC ID and deterministic backoff times for the STAs.

Each of the STAs 410-1 to 410-3 applies the frequency correction information before transmitting data 408-1 to 408-3. If the AP 402 determines that the frequency offset correction for each of the STAs 410-1 to 410-3 has been correctly applied, then the joint uplink transmissions from the STAs 410-1 to 410-3 going forward will be received at the AP 402 with minimal frequency synchronization problems and can therefore be decoded as an uplink MU-MIMO transmission. The AP can then send block acknowledgments 414-1 to 414-3 corresponding to each of the correctly received data transmissions 408-1 to 408-3.

It should be noted that the frequency offset estimates (and other correction estimates) described herein can be based on an estimate (and/or correction) determined during a previous downlink communication to the station. In another aspect, the offset is determined from an uplink communication from the station.

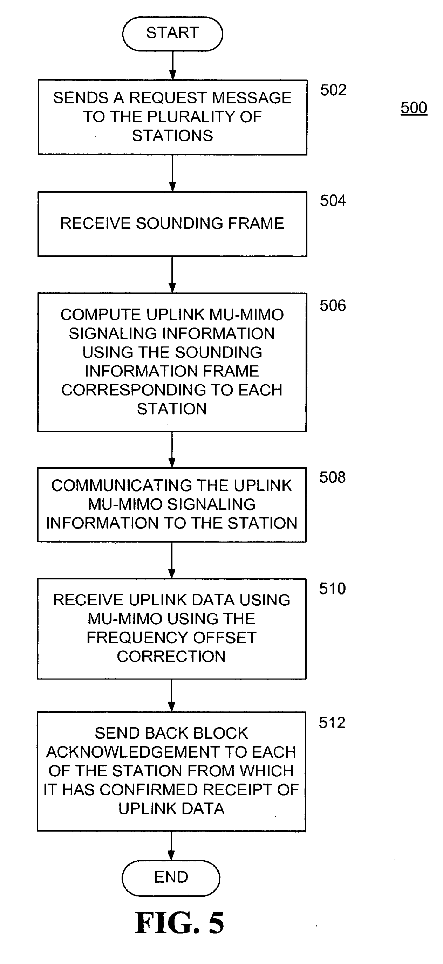

FIG. 5 illustrates a process 500 for uplink (UL) communication in a wireless system with a plurality of STAs in which synchronization resource requirements are reduced for the plurality of STAs. In step 502, an AP sends a Request Message (TRM) to the plurality of STAs. In various aspects of the disclosure, the AP uses a part of the TRM to set the NAV, in order to reserve the medium in its neighborhood. As discussed herein, the AP may follow the EDCA-based backoff procedure, such as that described in the 802.11 standard, prior to transmitting the TRM. The TRM may contain identification information, such as the MAC ID, and deterministic backoff times for the STAs. The AP may select STAs based on which STAs the AP has outdated buffer state information and/or channel state information for. In other words, the AP may select STAs to send the TRM based on the relevancy of the information about the STAs.

In step 504, in one aspect of the disclosure, the AP will receive what each STA sends, which is a CTS frame piggy-backed with UL traffic information in response to the TRM. To ensure that each CTS and sounding frame is received without interference, the CTS and sounding frames are transmitted by the plurality of STAs in a serial fashion, with a SIFS period between after each sounding frame and before each CTS frame. In one aspect of the disclosure, the STAs may send buffer size, Quality of Service (QoS), delay and latency requirements, and CQI information in addition to the sounding frames.

Then, in step 506, the AP computes UL MU-MIMO signaling information using the sounding information frame corresponding to each STA. In one aspect, the UL MU-MIMO signaling information includes a frequency offset correction determined for the specific STA. The frequency offset correction is determined by the AP using the sounding frame that it receives from each STA. Further, in another aspect of the disclosure, the UL MU-MIMO signaling information can include a UL MU-MIMO spatial stream index, a frame index , MCS, a time offset, a frequency offset, a power offset, and/or a cyclic prefix length. Thus, the STAs can correct the UL data and UL signaling for time, frequency, and power offsets contained in the RMC message.

The AP can then communicating the UL MU-MIMO signaling information to the STAs in step 508. The UL MU-MIMO signaling information is communicated using an RMC message. A portion of the RMC message is used to reserve the medium for UL MU-MIMO data transmission.

Once each STA has received its UL MU-MIMO signaling information, the STA can transmit UL data using MU-MIMO using the frequency offset correction, which is received by the AP in step 510. In one aspect, the STA can perform the frequency offset correction in the digital domain. The frequency offset correction process may be performed every transmission cycle or, in the alternative, performed only every few cycles. Thus, the frequency offset correction may be applied across a plurality of frames. In one aspect, to address any issues related to time synchronization, each STA uses an extended cyclic prefix for its MU-MIMO transmissions. Each UL frame can contain data transmission from a subset of STAs. the STAs can send UL data using extended cyclic prefix, with a cyclic prefix length specified in the RMC message

In step 512, once the frequency corrected UL data has been received by the AP, the AP will send back block ACKs to each of the STAs from which it has confirmed receipt of UL data. In one aspect of the disclosure, the AP can send the downlink Block ACKs in an MU-MIMO fashion based on the channel estimates calculated from the sounding frames received from the STAs. In addition, the AP can use the estimated frequency offset to correct the channel estimates before using them in precoding the signals sent in the downlink.

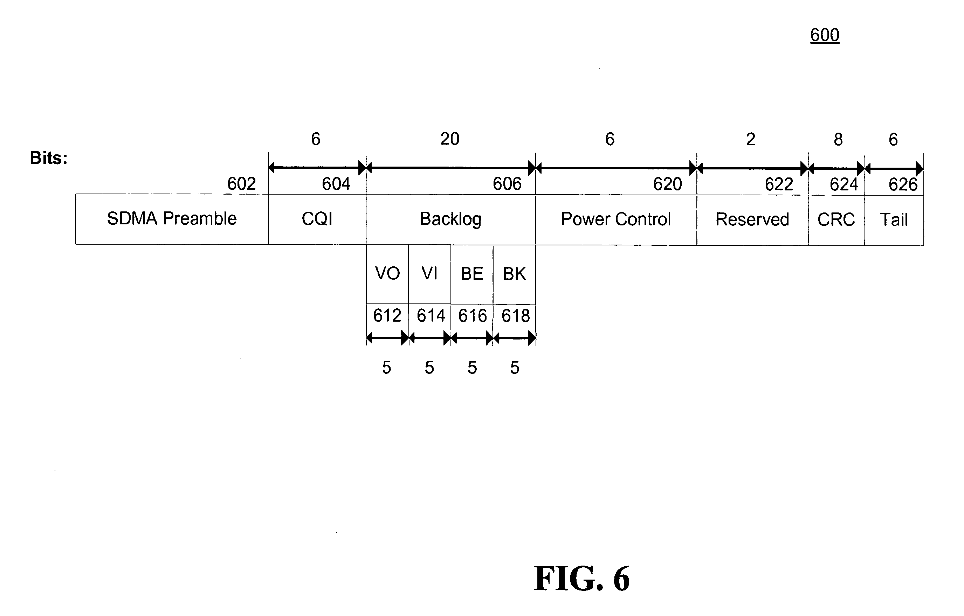

FIG. 6 illustrates a sounding frame 600 that includes an SDMA preamble portion 602 and a control information portion 604-626. In one aspect of the disclosure, the length of the SDMA preamble portion 602 is determined by the spatial stream allocation specified in the TRM 300. The control information portion 604-626 provides the following information:
(1) Channel Quality Indicator (CQI) field 604: The CQI field 604 contains the per-antenna received SNR averaged across all Rx antennas and tones for a received TRM. This information allows the SDMA transmitter to construct a precoding matrix, if the matrix construction design is based on the MMSE criterion. The information contained in the CQI field 604 also enables the SDMA transmitter to estimate the post detection signal to interference/noise ratio (SINR) and assign appropriate transmission rates for each responding STAs. In one aspect of the disclosure, the CQI can be measured by measuring a level of ambient noise surrounding the receiver during a quiet period;
(2) Uplink Traffic Backlog field 606: The information contained in the Uplink Traffic Backlog field 606 enables an SDMA transmitter to schedule uplink traffic epochs and/or assign reverse direction grants (RDG). The information contained in the Uplink Traffic Backlog field 606 also facilitates the scheduler creating a tight schedule, thereby optimizing performance of the MAC protocol. In one aspect, the uplink traffic backlog is presented on a per class basis, and VO (voice), VI (video), BE (best effort), and BK (background) fields 612-618 denote four example priority classes; and
(3) Power Control field 620: The transmit power information contained in the power control field 620 is filled in by an STA as described herein.

A CRC field 624 for error correction, and a tail field 626 is also included.

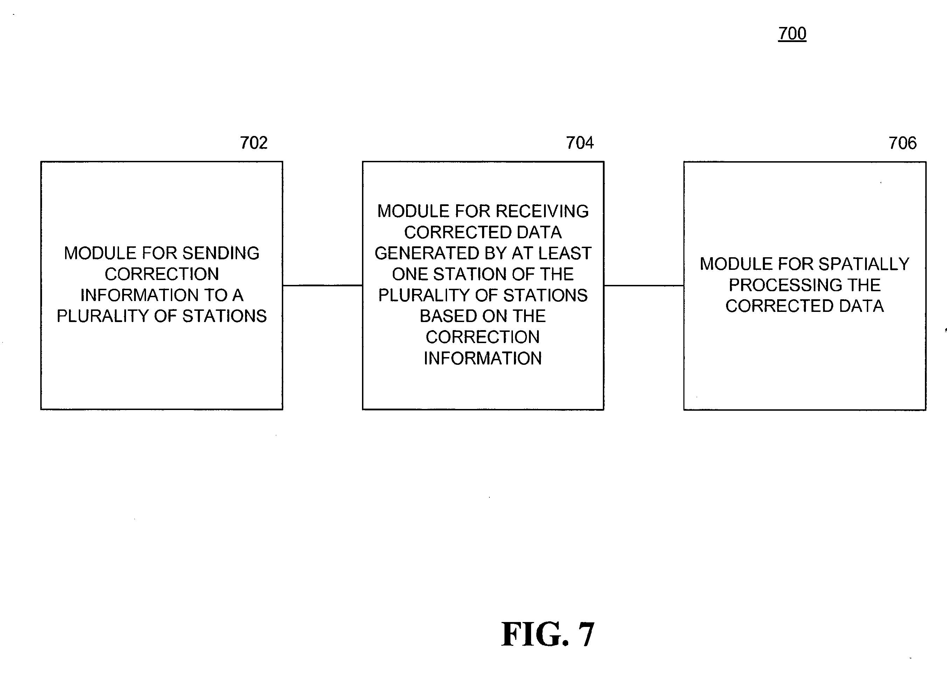

FIG. 7 is a diagram illustrating the functionality of an apparatus 700 in accordance with one aspect of the disclosure. The apparatus 700 includes a module 702 for sending correction information to a plurality of stations; a module 704 for receiving corrected data generated by at least one station of the plurality of stations based on the correction information; and a module 706 for spatially processing the corrected data.

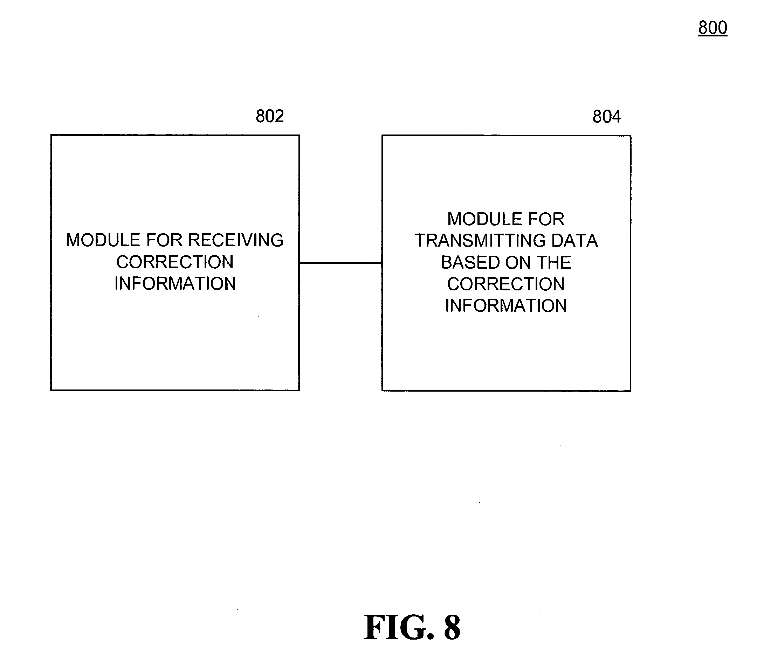

FIG. 8 is a diagram illustrating the functionality of an apparatus 800 in accordance with one aspect of the disclosure. The apparatus 800 includes a module 802 for receiving correction information; and a module 804 for transmitting data based on the correction information.

Those of skill will appreciate that any of the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The previous description is provided to enable any person skilled in the art to fully understand the full scope of the disclosure. Modifications to the various configurations disclosed herein will be readily apparent to those skilled in the art. Thus, the claims are not intended to be limited to the various aspects of the disclosure described herein, but is to be accorded the full scope consistent with the language of claims, wherein reference to an element in the singular is not intended to mean "one and only one" unless specifically so stated, but rather "one or more." Unless specifically stated otherwise, the term "some" refers to one or more. A claim that recites at least one of a combination of elements (e.g., "at least one of A, B, or C") refers to one or more of the recited elements (e.g., A, or B, or C, or any combination thereof). All structural and functional equivalents to the elements of the various aspects described throughout this disclosure that are known or later come to be known to those of ordinary skill in the art are intended to be encompassed by the claims. Moreover, nothing disclosed herein is intended to be dedicated to the public regardless of whether such disclosure is explicitly recited in the claims.

## Claims

1. A method (500) for wireless communications comprising:
sending (508) a frequency correction information including frequency offset correction to a plurality of wireless nodes;
receiving (510) corrected data generated by at least one wireless node of the plurality of wireless nodes based on the correction information; and
spatially processing the corrected data.

2. The method (500) of claim 1, wherein the sending of the correction information to the plurality of wireless nodes comprises requesting at least one wireless node in the plurality of wireless nodes to correct a frequency offset in a first communication based on a frequency offset estimate determined during a second communication.

3. The method (500) of claim 1, wherein the sending of the correction information to the plurality of wireless nodes comprises requesting at least one wireless node in the plurality of wireless nodes to correct a frequency offset in a communication based on a frequency offset estimate determined during a previous communication from the at least one wireless node.

4. The method (500) of claim 1, further comprising transmitting (502) a request for uplink information to the plurality of wireless nodes.

5. The method (500) of claim 4, wherein the request for uplink information comprises a reservation of a transmission medium to be used to receive at least one response to the request.

6. The method (500) of claim 4, wherein the request for uplink information is transmitted using a backoff procedure.

7. The method (500) of claim 1, further comprising selecting the plurality of wireless nodes based on a QoS requirement of at least one of the wireless nodes.

8. The method (500) of claim 1, further comprising determining (506) the frequency correction information for each one of the at least one wireless node of the plurality of wireless nodes from a sounding frame sent by the respective at least one wireless node.

9. The method (500) of claim 8, wherein the sounding frame was transmitted after a CTS frame that was also transmitted by each of the wireless nodes.

10. The method (500) of claim 8, further comprising transmitting (512) an acknowledgement message in an MU-MIMO fashion based on a channel estimate calculated from the respective sounding frame.

11. The method (500) of claim 10, further comprising modifying the channel estimate based on channel state information before the acknowledgement transmission.

12. An apparatus (700) for wireless communications, comprising:
means (702) for sending a frequency correction information including frequency offset correction to a plurality of wireless nodes;
means (704) for receiving corrected data generated by at least one wireless node of the plurality of wireless nodes based on the correction information; and
means (706) for spatially processing the corrected data.

13. A method for wireless communications comprising:
receiving a frequency correction information including frequency offset correction; and
transmitting data based on the correction information.

14. The method of claim 13, further comprising transmitting a sounding frame to allow the frequency correction information to be determined.

15. The method of claim 14, further comprising transmitting a CTS frame before the sounding frame, and preferably, providing a reduced interframe spacing between the CTS frame and the sounding frame transmissions and preferably providing a short interframe spacing before the CTS frame transmission.

16. The method of claim 14, wherein the sounding frame comprises a training portion comprising of a short training field and a long training field.

17. The method of claim 13, further comprising performing frequency correction based on the correction information, wherein the frequency correction is performed in a digital domain.

18. An apparatus (800) for wireless communications, comprising:
means (802) for receiving a frequency correction information including frequency offset correction; and
means (804) for transmitting data based on the correction information.

19. A computer-program product for wireless communications, comprising a machine-readable medium comprising instructions executable to perform the method of any one of claims 1 to 11 or 13 to 17.

## Patentansprüche

1. Ein Verfahren (500) für drahtlose Kommunikationen, wobei das Verfahren folgende Schritte aufweist:
Senden (508) von Frequenzkorrekturinformationen einschließlich einer Frequenzversatzkorrektur an eine Vielzahl von drahtlosen Knoten,
Empfangen (510) von korrigierten Daten, die durch wenigstens einen drahtlosen Knoten aus der Vielzahl von drahtlosen Knoten basierend auf den Korrekturinformationen erzeugt werden, und
räumliches Verarbeiten der korrigierten Daten.

2. Verfahren (500) nach Anspruch 1, wobei das Senden der Korrekturinformationen an die Vielzahl von drahtlosen Knoten das Auffordern wenigstens eines drahtlosen Knotens in der Vielzahl von drahtlosen Knoten zum Korrigieren eines Frequenzversatzes in einer ersten Kommunikation basierend auf einer während einer zweiten Kommunikation bestimmten Frequenzversatzschätzung aufweist.

3. Verfahren (500) nach Anspruch 1, wobei das Senden der Korrekturinformationen an die Vielzahl von drahtlosen Knoten das Auffordern wenigstens eines drahtlosen Knotens in der Vielzahl von drahtlosen Knoten zum Korrigieren eines Frequenzversatzes in einer Kommunikation basierend auf einer während einer vorausgehenden Kommunikation von dem wenigstens einen drahtlosen Knoten bestimmten Frequenzversatzschätzung aufweist.

4. Verfahren (500) nach Anspruch 1, das weiterhin das Senden (502) einer Anfrage für Aufwärtsstrecken-Informationen an die Vielzahl von drahtlosen Knoten aufweist.

5. Verfahren (500) nach Anspruch 4, wobei die Anfrage für Aufwärtsstrecken-Informationen eine Reservierung eines Sendemediums für die Verwendung zum Empfangen wenigstens einer Antwort auf die Anfrage aufweist.

6. Verfahren (500) nach Anspruch 4, wobei die Anfrage für Aufwärtsstrecken-Informationen während einer Backoff-Prozedur gesendet wird.

7. Verfahren (500) nach Anspruch 1, das weiterhin das Auswählen der Vielzahl von drahtlosen Knoten basierend auf einer Dienstgüte (QoS)-Anforderung wenigstens eines der drahtlosen Knoten aufweist.

8. Verfahren (500) nach Anspruch 1, das weiterhin das Bestimmen (506) der Frequenzkorrekturinformationen für jeden des wenigstens einen drahtlosen Knotens aus der Vielzahl von drahtlosen Knoten aus einem durch den entsprechenden wenigstens einen drahtlosen Knoten gesendeten Sounding- bzw. Sondierungsrahmen aufweist.

9. Verfahren (500) nach Anspruch 8, wobei der Sondierungsrahmen nach einem CTS-Rahmen gesendet wurde, der ebenfalls durch jeden der drahtlosen Knoten gesendet wurde.

10. Verfahren (500) nach Anspruch 8, das weiterhin das Senden (512) einer Bestätigungsnachricht in einer MU-MIMO-Weise basierend auf einer aus dem entsprechenden Sondierungsrahmen berechneten Kanalschätzung aufweist.

11. Verfahren (500) nach Anspruch 10, das weiterhin das Modifizieren der Kanalschätzung basierend auf Kanalzustandsinformationen vor dem Senden der Bestätigung aufweist.

12. Eine Vorrichtung (700) für drahtlose Kommunikationen, aufweisend:
Mittel (702) zum Senden von Frequenzkorrekturinformationen einschließlich einer Frequenzversatzkorrektur an eine Vielzahl von drahtlosen Knoten,
Mittel (704) zum Empfangen von korrigierten Daten, die durch wenigstens einen drahtlosen Knoten aus der Vielzahl von drahtlosen Knoten basierend auf den Korrekturinformationen erzeugt werden, und
Mittel (706) zum räumlichen Verarbeiten der korrigierten Daten.

13. Ein Verfahren für drahtlose Kommunikationen, wobei das Verfahren folgende Schritte aufweist:
Empfangen von Frequenzkorrekturinformationen einschließlich einer Frequenzversatzkorrektur, und
Senden von Daten basierend auf den Korrekturinformationen.

14. Verfahren nach Anspruch 13, das weiterhin das Senden eines Sounding- bzw. Sondierungsrahmens umfasst, damit die Frequenzkorrekturinformationen bestimmt werden können.

15. Verfahren nach Anspruch 14, das weiterhin das Senden eines CTS-Rahmens vor dem Sondierungsrahmen und vorzugsweise das Vorsehen eines reduzierten Zwischenrahmenabstands zwischen dem Senden des CTS-Rahmens und dem Senden des Sondierungsrahmens sowie vorzugsweise das Vorsehen eines kurzen Zwischenrahmenabstands vor dem Senden des CTS-Rahmens aufweist.

16. Verfahren nach Anspruch 14, wobei der Sondierungsrahmen einen Trainingsteil aufweist, der aus einem kurzen Trainingsfeld und einem langen Trainingsfeld besteht.

17. Verfahren nach Anspruch 13, das weiterhin das Durchführen einer Frequenzkorrektur basierend auf den Korrekturinformationen aufweist, wobei die Frequenzkorrektur in einer digitalen Domäne durchgeführt wird.

18. Vorrichtung (800) für drahtlose Kommunikationen, aufweisend:
Mittel (802) zum Empfangen von Frequenzkorrekturinformationen einschließlich einer Frequenzversatzkorrektur, und
Mittel (804) zum Senden von Daten basierend auf den Korrekturinformationen.

19. Ein Computerprogrammprodukt für drahtlose Kommunikationen, das ein maschinenlesbares Medium mit Befehlen aufweist, die ausgeführt werden können, um das Verfahren nach einem der Ansprüche 1 bis 11 oder 13 bis 17 durchzuführen.

## Revendications

1. Procédé (500) pour des communications sans fil, comprenant :
envoyer (508) à une pluralité de noeuds sans fil des informations de correction de fréquence comprenant une correction de décalage de fréquence ;
recevoir (510) des données corrigées générées par au moins un noeud sans fil de la pluralité de noeuds sans fil sur la base des informations de correction ; et
traiter spatialement les données corrigées.

2. Procédé (500) selon la revendication 1, dans lequel l'envoi des informations de correction à la pluralité de noeuds sans fil comprend de demander à au moins un noeud sans fil de la pluralité de noeuds sans fil de corriger un décalage de fréquence dans une première communication sur la base d'une estimation de décalage de fréquence déterminée pendant une deuxième communication.

3. Procédé (500) selon la revendication 1, dans lequel l'envoi des informations de correction à la pluralité de noeuds sans fil comprend de demander à au moins un noeud sans fil de la pluralité de noeuds sans fil de corriger un décalage de fréquence dans une communication sur la base d'une estimation de décalage de fréquence déterminée pendant une communication précédente à partir dudit au moins un noeud sans fil.

4. Procédé (500) selon la revendication 1, comprenant en outre la transmission (502) d'une demande pour des informations de liaison montante à la pluralité de noeuds sans fil.

5. Procédé (500) selon la revendication 4, dans lequel la demande pour des informations de liaison montante comprend la réservation d'un support de transmission à utiliser pour recevoir au moins une réponse à la demande.

6. Procédé (500) selon la revendication 4, dans lequel la demande d'informations de liaison montante est transmise en utilisant une procédure de réduction de puissance.

7. Procédé (500) selon la revendication 1, comprenant en outre une sélection de la pluralité de noeuds sans fil sur la base d'une exigence QoS d'au moins l'un des noeuds sans fil.

8. Procédé (500) selon la revendication 1, comprenant en outre la détermination (506) des informations de correction de fréquence pour chacun desdits au moins un noeud sans fil de la pluralité de noeuds sans fil à partir d'une trame de sondage envoyée par ledit au moins un noeud sans fil respectif.

9. Procédé (500) selon la revendication 8, dans lequel la trame de sondage a été transmise après une trame CTS qui a aussi été transmise par chacun des noeuds sans fil.

10. Procédé (500) selon la revendication 8, comprenant en outre la transmission (512) d'un message d'accusé de réception d'une manière MU-MIMO sur la base d'une estimation de canal calculée à partir de la trame de sondage respective.

11. Procédé (500) selon la revendication 10, comprenant en outre une modification de l'estimation de canal sur la base d'informations d'état de canal avant la transmission de l'accusé de réception.

12. Dispositif (700) pour des communications sans fil, comprenant :
des moyens (702) pour envoyer à une pluralité de noeuds sans fil des informations de correction de fréquence comprenant une correction de décalage de fréquence ;
des moyens (704) pour recevoir des données corrigées générées par au moins un noeud sans fil de la pluralité de noeuds sans fil sur la base des informations de correction ; et
des moyens (706) pour traiter spatialement les données corrigées.

13. Procédé de communication sans fil comprenant :
recevoir des informations de correction de fréquence comprenant une correction de décalage de fréquence ; et
transmettre des données sur la base des informations de correction.

14. Procédé selon la revendication 13, comprenant en outre la transmission d'une trame de sondage pour permettre de déterminer les informations de correction de fréquence.

15. Procédé selon la revendication 14, comprenant en outre la transmission d'une trame CTS avant la trame de sondage, et, de préférence, la prévision d'un espacement inter-trame réduit entre les transmissions de la trame CTS et de la trame de sondage et de préférence la prévision d'un espacement inter-trame court avant la transmission de la trame CTS.

16. Procédé selon la revendication 14, dans lequel la trame de sondage comprend une portion d'apprentissage comprenant un champ d'apprentissage court et un champ d'apprentissage long.

17. Procédé selon la revendication 13, comprenant en outre la réalisation d'une correction de fréquence sur la base des informations de correction, la correction de fréquence étant réalisée dans le domaine numérique.

18. Dispositif (800) pour des communications sans fil, comprenant :
des moyens (802) pour recevoir des informations de correction de fréquence comprenant une correction de décalage de fréquence ; et
des moyens (804) pour transmettre des données sur la base des informations de correction.

19. Produit programme d'ordinateur pour des communications sans fil, comprenant un support lisible par une machine comprenant des instructions exécutables pour réaliser le procédé de l'une quelconque des revendications 1 à 11 ou 13 à 17.
